Europäisches Patentamt

European Patent Office

Office européen des brevets

(19)

(11) **EP 1 306 770 A1**

(12) ## EUROPÄISCHE PATENTANMELDUNG

(43) Veröffentlichungstag:
**02.05.2003 Patentblatt 2003/18**

(51) Int Cl.[7]: **G06F 17/13**, G01K 1/02

(21) Anmeldenummer: **01811032.0**

(22) Anmeldetag: **23.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB Schweiz AG**
**5400 Baden (CH)**

(72) Erfinder: **Farruggio, David**
**5076 Bözen (CH)**

(74) Vertreter: **ABB Patent Attorneys**
**c/o ABB Schweiz AG**
**Brown Boveri Strasse 6**
**5400 Baden (CH)**

(54) ## Verfahren und System zur Schätzung der Temperaturverteilung in Festkörpern

(57) Die Erfindung betrifft ein Verfahren, ein System und ein Computerprogrammprodukt zur Schätzung der Temperaturverteilung ($T(x,t)$) in einem Festkörper (FK), welcher Festkörper (FK) im Kontakt mit einem Medium (MED) ist, mit mindestens einer Ortsvariablen (x) und mit einer Zeitvariablen (t). Die Temperaturverteilung ($T(x,t)$) wird als Reihenentwicklung einer dynamischen Mode

$$\left(\sum_{i=1}^{\infty} \sigma_i(x) \cdot \gamma_i(t)\right)$$

dargestellt, mit mindestens einer ortsabhängigen Eigenmode ($\sigma_i(x)$), mit mindestens einer zeitabhängigen Temperaturfunktion ($\gamma_i(t)$) und mit mindestens einem Modenwert (i). Die ortsabhängige Eigenmode ($\sigma_i(x)$) wird bis zu einer Approximationstiefe (N) von Modenwerten (i) berechnet. Entweder wird die zeitabhängige Temperaturfunktion ($\gamma_i(t)$) berechnet und aus dieser berechneten zeitabhängigen Temperaturfunktion ($\gamma_i(t)$) und der berechneten ortsabhängigen Eigenmode ($\sigma_i(x)$)

wird eine Reihenentwicklung

$$\left(\sum_{i=1}^{N} \sigma_i(x) \cdot \gamma_i(t)\right)$$

einer geschätzten Temperaturverteilung ($T(x,t)$) gebildet oder es wird eine Laplacetransformierte ($\gamma_i(s)$) der zeitabhängigen Temperaturfunktion ($\gamma_i(t)$) berechnet, aus dieser berechneten Laplacetransformierten ($\gamma_i(s)$) der zeitabhängigen Temperaturfunktion ($\gamma_i(t)$) und der berechneten ortsabhängigen Eigenmode ($\sigma_i(x)$) wird eine Reihenentwicklung

$$\left(\sum_{i=1}^{N} \sigma_i(x) \cdot \gamma_i(s)\right)$$

einer geschätzten Laplacetransformierten ($T(x,s)$) der Temperaturverteilung ($T(x,t)$) gebildet und eine Rücktransformation der geschätzten Laplacetransformierten ($T(x,s)$) der Temperaturverteilung ($T(x,t)$) durchgeführt.

Fig. 3

EP 1 306 770 A1

**Beschreibung**

Die Erfindung betrifft ein Verfahren, ein System und ein Computerprogrammprodukt zur Schätzung der Temperaturverteilung in Festkörpern gemäss der Definition der Patentansprüche.

Festkörper sind bspw. Bauteile wie Röhren, Rotoren, Turbinenachsen, Schrauben, usw., die in Anlagen wie Wärmekraftwerken, Öfen und Verbrennungsanlagen zu finden sind. Unter dem Aspekt einer hohen Wirtschaftlichkeit werden diese Festkörper kurzen An- und Abfahrtszeiten und somit schnellen Lastwechseln unterworfen, was sich in starken Temperaturschwankungen äussert und hohe Wärmespannungen verursacht. Die Beanspruchung der Festkörper ist somit permanent zu überwachen, um so frühzeitige Alterungen und irreversible Schädigungen der Festkörper sowie Ausfallzeiten der Anlagen zu vermeiden.

Prinzipiell lässt sich die Temperaturverteilung in Festkörpern durch Wärmefühler direkt ermitteln. Nachteilig an diesem Verfahren ist die hohe Zahl der benötigten Wärmefühler über die Länge und den Umfang der Festkörper, die entsprechend hohe Anzahl der Signalleitungen zum Weiterleiten der gemessenen Temperaturwerte sowie die erfolgende Beschädigung bzw. Schwächung der Festkörper bspw. durch Anbohren der Festkörper. Auch sind derartige Installationen aurwendig in der Montage und im Unterhalt, und sie sind im Betrieb anfällig auf Störungen.

Ein Lösung diesbezüglich wird im Dokument L. Speitkamp: Bestimmung von Temperaturdifferenzen in dickwandigen Druckbehältern, VGB Kraftwerkstechnik 68, Heft 2, 1988, Seiten 182 bis 186 beschrieben, wo die Messwerte eines an der Aussenwand des dickwandigen Druckbehälters angebrachten Thermoelementes erfasst werden und daraus in einer Rechenschaltung Temperaturdifferenzen im Inneren des dickwandigen Druckbehälters berechnet werden. Nachteilig an dieser rechnergestützten indirekten Temperaturermittlung Verfahren ist der damit verbundene hohe Aufwand.

Es ist ferner Wunsch der Betreiber von Anlagen mit Festkörpern, die Wärmespannungen unterworfen sind, deren Temperaturen kontinuierlich und möglichst verzögerungsfrei als Temperaturverläufe darzustellen, vorzugsweise auf Monitoren, und so die Temperaturen zu überwachen. Benötigt wird dazu ein System der Temperaturerfassung und der Darstellung von Temperaturverläufen von Festkörpern bspw. auf Monitoren, sowie ein Computerprogrammprodukt zur Berechnung und Darstellung solcher Temperaturverläufe.

Aufgabe der vorliegenden Erfindung ist es, ein Verfahren, ein System und ein Computerprogrammprodukt zur einfachen, raschen, sicheren und kostengünstigen Schätzung der Temperaturverteilung in Festkörpern bereitzustellen. Die Erfindung soll mit bestehenden und bewährten Normen und Standards der mechanischen Industrie und der Computertechnik kompatibel sein.

Diese Aufgabe wird durch die Erfindung gemäss der Definition der Patentansprüche gelöst.

Die Erfindung stellt ein Verfahren, ein System und ein Computerprogrammprodukt zur Schätzung der Temperaturverteilung in einem Festkörper, der im Kontakt mit einem Medium ist, bereit.

Die Idee der Erfindung besteht darin, die gesuchte Temperaturverteilung als Reihenentwicklung einer dynamischen Mode darzustellen. Diese dynamische Mode weist mindestens eine ortsabhängige Eigenmode und mindestens eine zeitabhängige Temperaturfunktion auf. Dies erlaubt eine nach Orts- und Zeitdimensionen separierte Ermittlung der ortsabhängigen Eigenmode und der zeitabhängigen Temperaturfunktion.

Die Reihenentwicklung wird für mindestens einen Modenwert durchgeführt. Dabei wird die ortsabhängige Eigenmode bis zu einer Approximationstiefe von Modenwerten ermittelt. Hierdurch erfolgt eine endlich dimensionale Schätzung.

In einer ersten Variante wird entweder die zeitabhängige Temperaturfunktion direkt ermittelt und aus dieser berechneten zeitabhängigen Temperaturfunktion und der ermittelten ortsabhängigen Eigenmode wird eine Reihenentwicklung einer geschätzten Temperaturverteilung gebildet.

In einer zweiten Variante, die alternativ zur ersten Variante ist, wird eine Laplacetransformierte der zeitabhängigen Temperaturfunktion ermittelt, aus dieser ermittelten Laplacetransformierten der zeitabhängigen Temperaturfunktion und der berechneten ortsabhängigen Eigenmode wird eine Reihenentwicklung einer geschätzten Laplacetransformierten der Temperaturverteilung gebildet und eine Rücktransformation der geschätzten Laplacetransformierten der Temperaturverteilung durchgeführt.

Im folgenden wird die Erfindung anhand von Ausführungsbeispielen gemäss der Fig. 1 bis 6 im Detail erläutert. Dabei zeigt:

Fig. 1        eine schematische Zeichnung einer typischen Temperaturverteilung innerhalb eines Festkörpers,

Fig. 2 & 3        eine erste Schätzung einer Temperaturverteilung in einem Festkörper,

Fig. 4 & 5        eine zweite Schätzung einer Temperaturverteilung in einem Festkörper, und

Fig. 6        eine schematische Zeichnung eines Systems, bestehend aus einem Temperaturfühler, einem Festkörper, einer Recheneinheit und einem Computerprogrammprodukt.

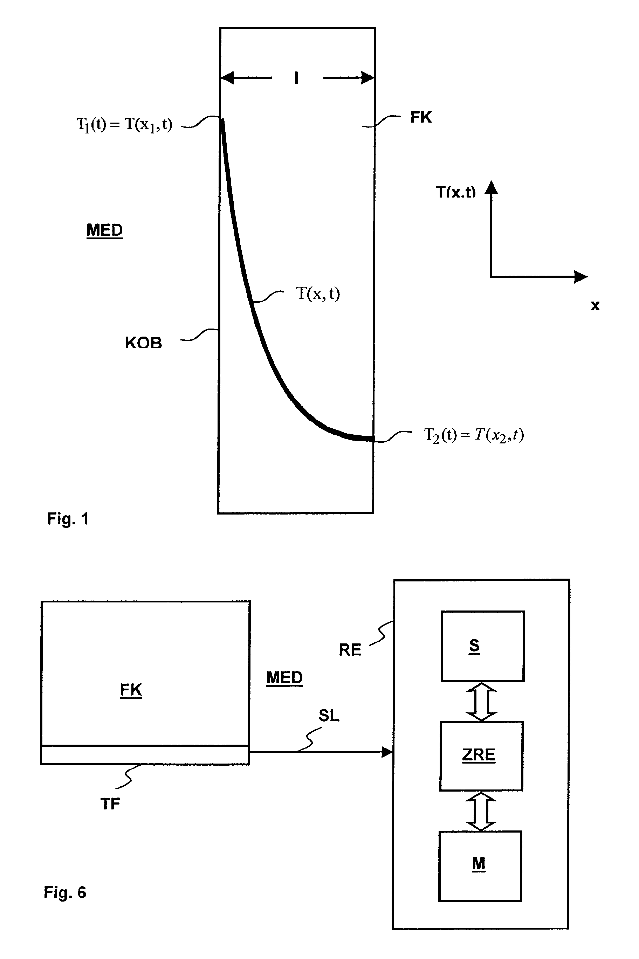

Die Beschreibung gemäss der Fig. 1 bis 5 bezieht sich auf das erfindungsgemässe Verfahren zur Schätzung der Temperaturverteilung $T(x,t)$ in einem Festkörper FK. Unter einem Festkörper FK wird ein zumindestens teilweise zusammenhängendes Materialvolumen verstanden. Ein Festkörper FK ist bspw. ein dreidimensionales Bauteil wie eine Röhre, ein Rotor, eine Turbinenachse, eine Schraube, usw.. Solche Bauteile sind in Anlagen wie Wärmekraftwerken, Öfen und Verbrennungsanlagen zu finden. Vorzugsweise sind solche Bauteile zumindestens teilweise metallisch. Vorzugsweise sind die Bauteile zumindestens teilweise dickwandig.

Wie in der schematischen Ausführungsform gemäss Fig. 1 gezeigt, ist ein Festkörper FK im Kontakt mit einem Medium MED wie Luft, Gas, Wasser, usw.. Bspw. ist ein Festkörper FK über eine Kontaktoberfläche KOB im direkten Kontakt mit einem Medium MED. Das Medium MED weist eine Temperatur T auf. Der Festkörper FK wird bspw. durch Wärmeübergang erwärmt. Bei Wärmeübergang entlang einer Ortsvariablen x in einer Wanddickenrichtung lässt sich eine dynamische Temperaturverteilung $T(x,t)$ im Innern des Festkörpers FK durch eine Wärmeleitungsgleichung wie folgt beschreiben:

$$\rho \cdot c_p \cdot \dot{T}(x,t) = k \cdot T''(x,t) \tag{1}$$

Formel 1 ist eine partielle Differentialgleichung zweiter Ordnung der Temperaturverteilung $T(x,t)$, wobei $\dot{T}(x,t)$ deren erste Ableitung nach einer Zeitvariablen t und $T''(x,t)$ deren zweite Ableitung nach der Ortsvariable x ist. Die Temperatur T des Mediums MED wird vorteilhafterweise an der Oberfläche des Festkörpers FK gemessen. $\rho$ gibt die Dichte des Festkörpers FK an, $c_p$ ist dessen spezifische Wärme, $k$ dessen thermische Leitfähigkeit und 1 dessen Dicke. Gemäss Fig. 1 nimmt die Temperaturverteilung $T(x,t)$ im Inneren des Festkörpers FK ab. Für Festkörper aus bekannten Werkstoffen wie Stahl, Edelstahl, Stahllegierungen, usw., sind die Parameter Dichte $\rho$, spezifische Wärme $c_p$ und thermische Leitfähigkeit $k$ dem Fachmann aus Datenblättern ersichtlich. Auch lässt sich Formel 1 natürlich auch in mehr als einer räumlichen Dimension mit mehr als einer Ortsvariablen formulieren, bspw. in drei räumlichen Dimensionen mit drei Ortsvariablen.

Zur Lösung von Formel 1 wird eine Laplace-Transformation bezüglich der Zeitvariablen t aus dem Zeitraum x,t in den Laplaceraum x,s vorgenommen. Die Laplacetransformierte der Formel 1 lautet:

$$\rho \cdot c_p \cdot s \cdot T(x,t) = k \cdot T''(x,t) \tag{2}$$

wobei s=j$\omega$ die komplexe Laplacevariable ist, j die imaginäre Einheit ist und $\omega$ die Frequenz der Temperaturverteilung $T(x,t)$ bezeichnet.

Formel 2 ist eine gewöhnliche Differentialgleichung, deren Lösung durch die Laplacetransformierte $T(x,s)$ der Temperaturverteilung $T(x,t)$ gemäss Formel 3 gegeben ist:

$$T(x,s) = F_1(s) \cdot \sinh\left(\sqrt{\frac{\rho \cdot c_p}{k} \cdot s} \cdot x\right) + F_2(s) \cdot \cosh\left(\sqrt{\frac{\rho \cdot c_p}{k} \cdot s} \cdot x\right) \tag{3}$$

wobei mit $F_1(s)$ und $F_2(s)$ Integrationskonstanten der Formel 3 bezeichnet werden, die von Randbedingungen abhängen.

Für einen Festkörper der Dicke 1, bei dem sowohl die Temperatur $T(0,s)$ an einem ersten Ende bei x=0 als auch die Temperatur $T(l,s)$ an einem zweiten Ende bei x=1 bekannt sind, gilt:

$$T(0,s) = F_2(s) \tag{4a}$$

$$T(l,s) = F_1(s) \cdot \sinh\left(\sqrt{\frac{\rho \cdot c_p}{k} \cdot s} \cdot l\right) + F_2(s) \cdot \cosh\left(\sqrt{\frac{\rho \cdot c_p}{k} \cdot s} \cdot l\right) \qquad (4b)$$

und somit gilt die Laplacetransformierte $T(x,s)$ der Temperaturverteilung $T(x,t)$:

$$T(x,s) = \frac{\sinh\left(\sqrt{\frac{\rho \cdot c_p}{k} \cdot s} \cdot (l-x)\right)}{\sinh\left(\sqrt{\frac{\rho \cdot c_p}{k} \cdot s} \cdot l\right)} \cdot T(0,s) + \frac{\sinh\left(\sqrt{\frac{\rho \cdot c_p}{k} \cdot s} \cdot x\right)}{\sinh\left(\sqrt{\frac{\rho \cdot c_p}{k} \cdot s} \cdot l\right)} \cdot T(l,s) \qquad (5)$$

Für einen Festkörper der Dicke 1, bei dem lediglich die Temperatur $T(0,s)$ am ersten Ende bei x=0 bekannt ist, und bei dem die Temperatur $T(l,s)$ am zweiten Ende bei x=1 unbekannt ist, gilt unter der Annahme, dass keine Wärme in das umgebende Medium abfliesst, d.h. dass das zweite Ende ideal isoliert ist:

$$T(0,s) = F_2(s) \qquad (6a)$$

$$T'(l,s) = F_1(s) \cdot \cosh\left(\sqrt{\frac{\rho \cdot c_p}{k} \cdot s} \cdot l\right) + F_2(s) \cdot \sinh\left(\sqrt{\frac{\rho \cdot c_p}{k} \cdot s} \cdot l\right) = 0 \qquad (6b)$$

und hiermit:

$$T(x,s) = \frac{\cosh\left(\sqrt{\frac{\rho \cdot c_p}{k} \cdot s} \cdot (l-x)\right)}{\cosh\left(\sqrt{\frac{\rho \cdot c_p}{k} \cdot s} \cdot l\right)} \cdot T(0,s) \qquad (7)$$

Die Laplacetransformierte $T(x,s)$ der Temperaturverteilung $T(x,t)$ lässt sich an einen beliebigen Punkt im Innern des Festkörpers einfach berechnen. Nicht bestimmbar ist jedoch deren zeitlicher Verlauf, durch Rücktransformation aus dem Laplaceraum x,s in den Zeitraum x,t. Der Grund liegt darin, dass das System unendlich viele Zustände hat und deshalb nicht als gebrochen-rationale Lösung wiedergegeben werden kann.

**Hier setzt die Erfindung ein.**

In einem Verfahrensschritt wird die Temperaturverteilung $T(x,t)$ als Reihenentwicklung dargestellt. Bspw. lautet eine solche Reihenentwicklung gemäss Formel 8:

$$T(x,t) = T_0(x,t) + \sum_{i=1}^{\infty} \sigma_i(x) \cdot \gamma_i(t) \qquad (8)$$

Der erste Term $T_0(x,t)$ wird als statischer Mode bezeichnet. Er ist optional und beschreibt den Verharrungszustand des Systems, der Zustand wo sämtlichen dynamischen Vorgänge beendet sind, d. h. sämtliche Ableitungen nach der Zeitvariablen t verschwinden. Der zweite Term

$$\sum_{i=1}^{\infty} \sigma_i(x) \cdot \gamma_i(t)$$

wird als dynamischer Mode bezeichnet. $\sigma_i(x)$ ist eine ortsabhängige Eigenmode und $\gamma_i(t)$ ist eine zeitabhängige Temperaturfunktion. Die ganzen Zahlen $i=1,2,...,\infty$ bezeichnen die Modenwerte des dynamischen Modes. Zur Berechnung der ortsabhängige Eigenmode $\sigma_i(x)$ und der zeitabhängige Temperaturfunktion $\gamma_i(t)$ wird mindestens eine Temperatur T erfasst.

In einem weiteren Verfahrensschritt werden in einer ersten Variante die zeitabhängige Temperaturfunktion $\gamma_i$ (t) respektive in einer zweiten Variante eine Laplacetransformierte $\gamma_i(s)$ der zeitabhängigen Temperaturfunktion $\gamma_i(t)$ sowie die ortsabhängige Eigenmode $\sigma_i(x)$ berechnet.

Zur Berechnung der zeitabhängigen Temperaturfunktion $\gamma_i(t)$ respektive der Laplacetransformierten $\gamma_i(s)$ der zeitabhängigen Temperaturfunktion $\gamma_i(t)$ wird die im Festkörper gespeicherte potentielle Energie U berechnet, es wird die Dissipation R zwischen dem Festkörper und dem Medium berechnet und diese potentielle Energie U und diese Dissipation R werden über die Gleichung von Euler-Lagrange miteinander ins Verhältnis gesetzt.

Die potentielle Energie U wird gemäss Formel 9 dargestellt als:

$$U = \frac{1}{2} \cdot k \cdot \int_0^l T'(x,t)^2 \, dx \qquad (9)$$

Durch Einsetzen der Formel 8 in die Formel 9 folgt:

$$U = \frac{1}{2} \cdot k \left( \int_0^l T_0'(x,t)^2 \, dx + 2 \int T_0'(x,t) \sum \sigma_i'(x) \cdot \gamma_i(t) dx + \sum_{i=1}^{\infty} \gamma_i(t)^2 \cdot \int_0^l \sigma_i'(x)^2 \, dx \right) \quad (10)$$

Die Dissipation R ist die Verlustenergie, welche durch den Wärmeaustausch zwischen dem Medium und dem Festkörper hervorgerufen wird. Die Dissipation R wird dargestellt als:

$$R = \frac{1}{2} \cdot k \cdot \int_0^l \dot{T}(x,t)^2 \, dx \qquad (11)$$

Durch Einsetzen der Formel 8 in die Formel 11 folgt:

$$R = \frac{1}{2} \cdot \rho \cdot c_p \cdot \left( \int_0^l T'(x,t)^2 \cdot dx + 2 \int_0^l \dot{T}(x,t) \sum_{i=1}^\infty \sigma_i(x) \cdot \dot{\gamma}_i(t) \cdot dx + \sum_{i=1}^\infty \dot{\gamma}_i(t)^2 \int_0^l \sigma_i(x)^2 dx \right) \quad (12)$$

Nach der Gleichung von Euler-Lagrange gilt:

$$\frac{\partial U}{\partial \gamma} = -\frac{\partial R}{\partial \dot{\gamma}} \quad (13)$$

und hiermit:

$$k \left( \int_0^l T_0'(x,t) \cdot \sigma_i'(x) \cdot dx + \gamma_i(t) \cdot \int_0^l \sigma_i'(x)^2 \cdot dx \right)$$
$$= -\rho \cdot c_p \cdot \left( \int_0^l \dot{T}_0(x,t) \cdot \sigma_i(x) \cdot dx + \dot{\gamma}_i(t) \cdot \int_0^l \sigma_i(x)^2 \cdot dx \right) \quad (14)$$

In einer ersten Variante erhält man die zeitabhängige Temperaturfunktion $\gamma_i(t)$ durch Lösen der Differentialgleichung:

$$\left( \int_0^l T_0'(x,t) \cdot \sigma_i'(x) \cdot dx + \gamma_i(t) \cdot \int_0^l \sigma_i'(x)^2 \cdot dx \right) +$$
$$\frac{\rho \cdot c_p}{k} \cdot \left( \int_0^l \dot{T}_0(x,t) \cdot \sigma_i(x) \cdot dx + \dot{\gamma}_i(t) \cdot \int_0^l \sigma_i(x)^2 \cdot dx \right) = 0 \quad (15a)$$

Alternativ zu dieser ersten Variante ist es möglich, anstat diese Differentialgleichung gemäss Formel 15a zu lösen, in einer zweiten Variante nach Laplace-Transformation die Laplacetransformierte $\gamma_i(s)$ der zeitabhängigen Temperaturfunktion $\gamma_i(t)$ zu berechnen:

$$y_i(s) = -\frac{\int_0^l \sigma_i'(x) \cdot T_0'(x,t) \cdot dx + \frac{\rho \cdot c_p}{k} \cdot s \cdot \int_0^l \sigma_i(x) \cdot T_0(x,t) \cdot dx}{\int_0^l \sigma_i'(x)^2 \cdot dx + \frac{\rho \cdot c_p}{k} \cdot s \cdot \int_0^l \sigma_i(x)^2 \cdot dx} \quad (15b)$$

Beide Varianten weisen die gleiche Genauigkeit auf und benötigen ungefähr den gleichen numerischen Rechenaufwand.

Die Berechnung der ortsabhängige Eigenmode $\sigma_i(x)$ erfolgt durch Diskretisieren. Als Eigenmodi werden solche Funktionen bezeichnet, die in der Summe eine gegebene Funktion abbilden und die weitgehend orthogonal zueinander sind, d.h. die weitgehend linear unabhängig sind. Zwei Eigenmodi $\sigma_i(x)$, $\sigma_i(x)$ erfüllen somit ein Integral gemäss Formel 16:

$$\int_{x1}^{x2} \sigma_i(x) \cdot \sigma_{i'}(x) \, dx \approx 0 \qquad i \neq i' \tag{16}$$

Wobei die Modenwerte $i,i'$=1,2,...,$\infty$ ganze Zahlen sind und x1,x2 zwei Ortsvariablen sind. Die Bedingung, dass die Eigenmodi weitgehend orthogonal zueinander sind, heisst, dass der Wert vom Integral gemäss Formel 16 möglichst klein, vorzugsweise gleich Null ist, um genaue Schätzungen der Temperaturverteilung im Festkörper zu liefern. Das Verfahren gemäss der vorliegenden Erfindung funktioniert somit auch für nicht streng orthogonal zueinander stehende Eigenmodi.

Nach dem Prinzip von d'Alembert lässt sich die Lösung der Formel 1 in die ortsabhängige Eigenmode $\sigma_i(x)$ und in die zeitabhängige Temperaturfunktion $\gamma_i(t)$ aufteilen. Damit folgt:

$$\frac{\rho \cdot c_p}{k} \cdot \frac{\dot{\gamma}_i(t)}{\gamma_i(t)} = \frac{\sigma_i''(x)}{\sigma_i(x)} = -\Omega_i^2 \tag{17}$$

wobei $\Omega_i$ eine Eigenfrequenz der Temperaturverteilung $T(x,t)$ bezeichnet. Da der linke Term nur von der Zeitvariablen t und der mittlere Term nur von der Ortsvariablen x abhängt, müssen beide Terme konstant sein. Aus der Lösung der Differentialgleichung:

$$\sigma_i''(x) + \Omega_i^2 \cdot \sigma_i(x) = 0 \tag{18}$$

folgt die allgemeine Formel für die ortsabhängigen Eigenmodi $\sigma_i(x)$:

$$\sigma_i(x) = C_1 \cdot \cos(\Omega_i \cdot x) + C_2 \cdot \sin(\Omega_i \cdot x) \tag{19}$$

wobei mit $C_1$ und $C_2$ Integrationskonstanten der Formel 19 bezeichnet werden, die, genauso wie die Eigenfrequenz $\Omega_i$ von Randbedingungen abhängen.

In einem weiteren Verfahrensschritt wird in einer ersten Variante aus dieser berechneten zeitabhängigen Temperaturfunktion $\gamma_i(t)$ gemäss der Lösung von Formel 15a und der berechneten ortsabhängigen Eigenmode $\sigma_i(x)$ gemäss Formel 19 eine Reihenentwicklung

$$\sum_{i=1}^{N} \sigma_i(x) \cdot \gamma_i(t)$$

einer geschätzten Temperaturverteilung $T(x,t)$ gebildet.

In einer zweiten Variante wird aus dieser berechneten Laplacetransformierten $\gamma_i(s)$ der zeitabhängigen Temperaturfunktion $\gamma_i(t)$ gemäss Formel 15b und der berechneten ortsabhängigen Eigenmode $\sigma_i(x)$ gemäss Forml 19 ine Reihenentwicklung

$$\sum_{i=1}^{N} \sigma_i(x) \cdot \gamma_i(s)$$

einer geschätzten Laplacetransformierten $T(x,s)$ der Temperaturverteilung $T(x,t)$ gebildet, und eine Rücktransformation der geschätzten Laplacetransformierten $T(x,s)$ der Temperaturverteilung $T(x,t)$ durchgeführt.

**Ausführungsbeispiel 1:** Für einen Festkörper der Dicke 1, bei dem sowohl die Temperatur $T(0,s)$ an einem ersten Ende bei x=0 als auch die Temperatur $T(l,s)$ an einem zweiten Ende bei x=1 bekannt sind, gilt:

$$\sigma_i(0) = C_1 = 0 \tag{19a}$$

$$\sigma_i(l) = C_1 \cdot \cos(\Omega_i \cdot l) + C_2 \cdot \sin(\Omega_i \cdot l) = 0 \tag{19b}$$

Die ortsabhängigen Eigenmodi werden auf

$$\int_0^l \sigma_i(x)^2 = 1$$

normiert und es gelten die ortsabhängigen Eigenmodi $\sigma_i(x)$:

$$\sigma_i(x) = \sqrt{\frac{2}{l}} \cdot \sin(\Omega_i \cdot l), \ \Omega_i = \frac{i \cdot \pi}{l} \tag{20}$$

Speziell für den ersten Modenwert i=1 gilt die Temperaturverteilung $T_0(x,t)$:

$$T_0(x,t) = T(0,s) + \frac{x}{l} \cdot (T(l,s) - T(0,s)) \tag{21}$$

Durch Einsetzen der Formeln 15b, 20 und 21 in Formel 8 folgt eine Schätzung der Laplacetransformierten $T$ $(x,s)$ der Temperaturverteilung $T(x,t)$:

$$T(x,s) = T(0,s) + \frac{x}{l} \cdot (T(l,s) - T(0,s)) \ldots$$

$$- \sum_{i=1}^{\infty} 2 \cdot \frac{\sin(\Omega_i \cdot x)}{\Omega_i \cdot l} \cdot \frac{\frac{\rho \cdot c_p}{k} \cdot s}{\frac{\rho \cdot c_p}{k} \cdot s + \Omega_i^2} \cdot (T(0,s) - \cos(\Omega_i \cdot l) \cdot T(l,s)) \tag{22}$$

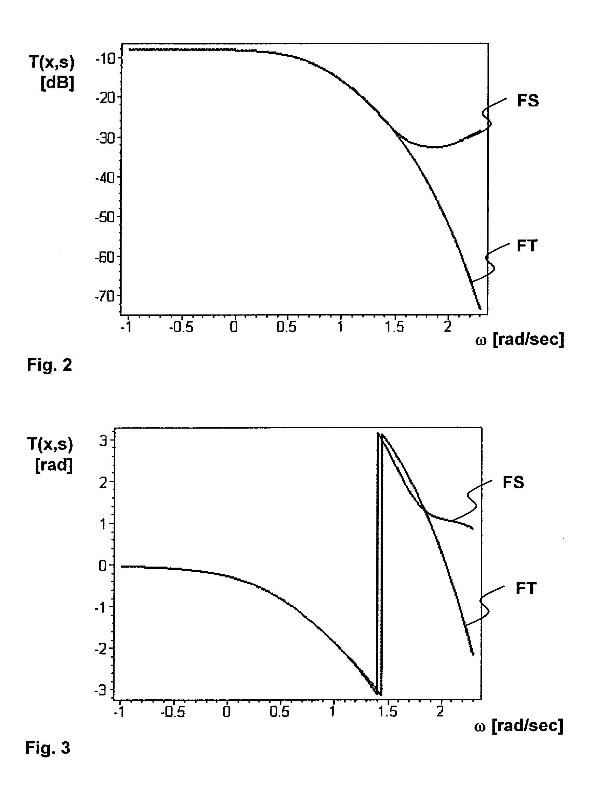

Werden nicht alle ortsabhängigen Eigenmodi $\sigma_i(x)$ in Betracht gezogen, sondern wird Formel 22 nur für Modenwerte i kleiner/gleich einer Approximationstiefe N gerechnet, so erhält man eine endlich dimensionale Schätzung der Laplacetransformierten $T(x,s)$ der Temperaturverteilung $T(x,t)$. Die Approximationstiefe $N$ ist ein endlicher Wert und bestimmt sich einerseits aus der zur Verfügung stehenden Rechenleistung und andererseits aus der geforderten Bandbreite an die Schätzung der Laplacetransformierten $T(x,s)$ der Temperaturverteilung $T(x,t)$ im Festkörper. Mit Erhöhung der Approximationstiefe N steigt die Rechenlast, bspw. steigt die Rechenlast linear mit der Approximationstiefe N. Die Schätzung der Laplacetransformierten $T(x,s)$ der Temperaturverteilung $T(x,t)$ im Festkörper äussert sich darin, dass die Approximationstiefe N nur bis zu einer bestimmten Frequenz ω dem tatsächlichen Frequenzgang der Laplacetransformierten $T(x,s)$ der Temperaturverteilung $T(x,t)$ folgt. Durch Steigerung der Approximationstiefe N kann diese Frequenz ω erhöht werden. Ein Vergleich der tatsächlichen Laplacetransformierten $T(x,s)$ der Temperaturverteilung $T(x,t)$ gemäss Formel 5 mit der Schätzung der Laplacetransformierten $T(x,s)$ der Temperaturverteilung $T(x,t)$ gemäss Formel 22 mit sechs Eigenmodi (N=6) ist in den Fig. 2 und 3 wiedergegeben. Fig. 2 ist eine Auftragung des Pegels der Laplacetransformierten $T(x,s)$ der Temperaturverteilung $T(x,t)$ in Dezibel (dB) über der Frequenz ω in Radianten pro Sekunde (rad/sec). Fig. 3 ist eine Auftragung der Phase der Laplacetransformierten $T(x,s)$ der Temperaturverteilung $T(x,t)$ in Radianten (rad) über der Frequenz ω in Radianten pro Sekunde (rad/sec). Ab einer beispielhaften Frequenz ω=1.6 rad/sec folgt der Frequenzgang FS der Schätzung der Temperaturverteilung $T(x,t)$ nicht mehr dem tatsächlichen Frequenzgang FT der Temperaturverteilung $T(x,t)$.

**Ausführungsbeispiel 2:** Für einen Festkörper der Dicke 1, bei dem lediglich die Temperatur $T(0,s)$ am ersten Ende bei x=0 bekannt ist, und bei dem die Temperatur $T(l,s)$ am zweiten Ende bei x=1 unbekannt ist, gilt unter der Annahme, dass keine Wärme in das umgebende Medium abfliesst, d.h. dass das zweite Ende ideal isoliert ist:

$$\sigma_i(0) = 0 \qquad (23a)$$

$$\sigma_i(l) = 0 \qquad (23b)$$

Die ortsabhängigen Eigenmodi werden auf

$$\int_0^l \sigma_i(x)^2 = 1$$

normiert. Hieraus folgt für die ortsabhängigen Eigenmodi $\sigma_i(x)$:

$$\sigma_i(x) = \sqrt{\frac{2}{l}} \cdot \sin(\Omega_i \cdot x), \quad \Omega_i = \left(i - \frac{1}{2}\right) \cdot \frac{\pi}{l} \qquad (24a)$$

$$T_0(x,s) = T(0,s) \qquad (24b)$$

Durch Einsetzen der Formeln 15b, 24a und 24b in Formel 8 folgt die Laplacetransformierte $T(x,s)$ der Temperaturverteilung $T(x,t)$:

$$T(x,s) = T(0,s) - \sum_{i=1}^{\infty} 2 \cdot \frac{\sin(\Omega_i \cdot x)}{\Omega_i \cdot l} \cdot \frac{\dfrac{\rho \cdot c_p}{k} \cdot s}{\dfrac{\rho \cdot c_p}{k} \cdot s + \Omega_i^2} \cdot (1 - \cos(\Omega_i \cdot l)) \cdot T(0,s) \quad (25)$$

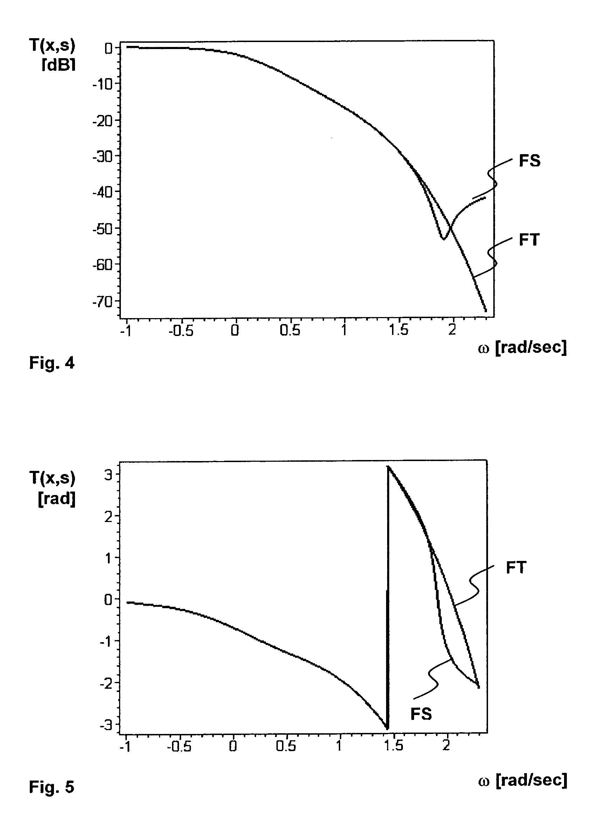

Ein Vergleich der exakten und der approximierten Laplacetransformierten ist in den Fig. 4 und 5 wiedergegeben. Fig. 4 ist eine Auftragung des Pegels der Laplacetransformierten $T(x,s)$ der Temperaturverteilung $T(x,t)$ in Dezibel (dB) über der Frequenz ω in Radianten pro Sekunde (rad/sec). Fig. 5 ist eine Auftragung der Phase der Laplacetransformierten $T(x,s)$ der Temperaturverteilung $T(x,t)$ in Radianten (rad) über der Frequenz ω in Radianten pro Sekunde (rad/sec). Auch hier gilt, dass ab einer beispielhaften Frequenz ω=1.7 rad/sec der Frequenzgang FS der Schätzung der Temperaturverteilung $T(x,t)$ nicht mehr dem tatsächlichen Frequenzgang FT der Temperaturverteilung $T(x,t)$ folgt.

Fig. 6 zeigt eine schematische Zeichnung eines Systems, bestehend aus mindestens einem Temperaturfühler TF, einem Festkörper FK, einer Recheneinheit RE und mindestens einem Computerprogrammprodukt, welches ein Computerprogramm repräsentiert. Dieses System erlaubt eine weitgehend kontinuierliche Messung von mindestens einer Temperatur T am Festkörper FK, eine weitgehend verzögerungsfreie Berechnung bzw. Darstellung von Temperaturverläufen in Festkörpern FK. Das Computerprogrammprodukt basiert auf dem erfindungsgemässen Verfahren zur Schätzung der Temperaturerteilung $T(x,t)$ in einem Festkörper FK der Beschreibung gemäss der Fig. 1 bis 5, so dass darauf verwiesen wird.

Der Festkörper FK ist bspw. ein dreidimensionales Bauteil, welches im Kontakt mit einem Medium MED ist und durch Wärmeübergang erwärmt wird. Mit einem Temperaturfühler TF wird die Temperatur T des Mediums erfasst.

**EP 1 306 770 A1**

Vorteilhafterweise wird die Temperatur T des Mediums MED an einer Kontaktoberfläche KOB des Festkörpers FK gemessen. Die Temperaturmessung kann direkt bzw. indirekt erfolgen. Typische und bekannte Temperaturfühler TF wie Widerstandsmesser, Thermoelemente, usw. kommen dabei zum Einsatz. Die Temperaturmessung kann weitgehend kontinuierlich erfolgen. Weitgehend kontinuierlich heisst, dass diese Temperatur T in mehr oder weniger grossen zeitlichen Abständen bzw. in mehr oder weniger regelmässigen zeitlichen Abständen, bspw. alle 250 msec, bzw. alle 25 msec, bzw. alle 10 msec erfasst wird. Typische und bekannte Erfassungsgeräte von Temperaturfühlern TF kommen dabei zum Einsatz. Bei Kenntnis der vorliegenden Erfindung hat der Fachmann hierbei vielfältige Möglichkeiten der Variation.

Diese erfasste Temperatur T wird bspw. über eine Signalleitung SL an die Recheneinheit RE übermittelt. Typische und bekannte Signalleitungen SL zur Übermittlung elektrischer - bzw. optischer Signale kommen dabei zum Einsatz. Bspw. handelt es sich ein metallisches Kabel bzw. um ein Glasfaserkabel. Vorteilhafterweise ist die Signalleitung SL über eine genormte Schnittstelle, bspw. über eine serielle Schnittstelle mit einem Erfassungsgerät des Temperaturfühlers TF sowie mit der Recheneinheit RE verbunden. Bei Kenntnis der vorliegenden Erfindung hat der Fachmann hierbei vielfältige Möglichkeiten der Variation. Bspw. ist auch eine Funkübertragung der erfassten Temperatur T möglich.

Die Recheneinheit RE umfasst mindestens einen Speicher S und mindestens eine zentrale Recheneinheit ZRE. Die Recheneinheit RE ist bspw. ein handelsüblicher Personal Computer bzw. eine Workstation. Im Speicher S ist bspw. mindestens ein Computerprogramm gespeichert. Im Speicher S lassen sich bspw. auch erfasste Temperaturen T speichern. Die zentrale Recheneinheit ZRE ist bspw. ein handelsüblicher Prozessor und dient der Ausführung des Computerprogramms. Vorteilhafterweise führt das Computerprogramm diese Berechnung von Temperaturverläufen in Festkörpern FK auf der zentralen Recheneinheit ZRE weitgehend verzögerungsfrei aus. Auf mindestens einem Monitor M lässt sich das Ergebnis der Berechnung des Computerprogramms darstellen. Vorteilhafterweise erfolgt diese Darstellung von Temperaturverläufen in Festkörpern FK weitgehend verzögerungsfrei. Weitgehend verzögerungsfrei heisst, dass die Berechnung bzw. die Darstellung der Temperaturverläufe in einem Festkörper FK - je nach Rechenleistung der Recheneinheit RE - mehr oder weniger in Echtzeit erfolgt. Eine solche Darstellung von Temperaturverläufen in Festkörpern FK ermöglicht eine einfache und sichere Überwachung der Temperatur sowie der thermischen Beanspruchung der Festkörper FK. Bei Kenntnis der vorliegenden Erfindung hat der Fachmann hierbei vielfältige Möglichkeiten der Variation. Bspw. lässt sich eine Recheneinheit mit mehreren Speichern und mit mehreren zentralen Recheneinheiten verwenden. Auch lässt sich der Temperaturverlauf im Festkörper FK anders als auf einem Monitor darstellen. Bspw. weist das System Mittel auf, um die Schätzung der Temperaturerteilung $T(x,t)$ in einem Festkörper FK als mindestens ein Ausdruck, bspw auf Papier, usw., und/oder als mindestens ein akustischer Wamton, und/oder als mindestens ein optisches Warnsignal, usw. darzustellen.

**Liste der Bezugszeichen**

| | |
|---|---|
| $c_p$ | spezifische Wärme des Festkörpers FK |
| $C_1, C_2$ | Integrationskonstanten der Formel 19 |
| dB | Dezibel |
| FK | Festkörper |
| FS | geschätzter Frequenzgang |
| FT | tatsächlicher Frequenzgang |
| $F_1(s), F_2(s)$ | Integrationskonstanten der Formel 3 |
| $\gamma_i(t)$ | zeitabhängige Temperaturfunktion |
| $\gamma_i(s)$ | Laplacetransformierte der zeitabhängigen Temperaturfunktion $\gamma_i(t)$ |
| 1 | Dicke des Festkörpers FK |
| i, i' | Modenwerte |
| j | imaginäre Einheit |
| $k$ | thermische Leitfähigkeit des Festkörpers FK |
| N | Approximationstiefe |
| M | Monitor |
| MED | Medium |
| KOB | Kontaktoberfläche des Festkörpers FK mit dem Medium MED |
| rad | Radianten |
| RE | Recheneinheit |
| R | Dissipation |
| ρ | Dichte des Festkörpers FK |

**10**

| | |
|---|---|
| s | komplexe Laplacevariable |
| S | Speicher |
| sec | Sekunde |
| SL | Signalleitung |
| s,x | Laplaceraum |
| $\sigma_i(x)$ | ortsabhängige Eigenmode |
| $\sigma''_i(x)$ | zweite Ableitung der ortsabhängigen Eigenmode nach der Ortsvariablen x |
| $\omega$ | Frequenz der Temperaturverteilung $T(x,t)$ |
| $\Omega_i$ | Eigenfrequenz der Temperaturverteilung $T(x,t)$ |
| t | Zeitvariable |
| T | gemessene Temperatur des Mediums |
| $T(x,t)$ | Temperaturverteilung im Festkörper FK |
| $\dot{T}(x,t)$ | erste Ableitung der Temperaturverteilung $T(x,t)$ nach der Zeitvariablen t |
| $T''(x,t)$ | zweite Ableitung der Temperaturverteilung $T(x,t)$ nach der Ortsvariablen x |
| $T(x,s)$ | Laplacetransformierte der Temperaturverteilung $T(x,t)$ |
| $T_0(x,t)$ | statischer Mode der Temperaturverteilung $T(x,t)$ |
| **TF** | Temperaturfühler |
| U | potentielle Energie |
| x | Ortsvariable |
| x,t | Zeitraum |
| ZE | zentrale Recheneinheit |

**Patentansprüche**

1. Verfahren zur Schätzung der Temperaturverteilung ($T(x,t)$) in einem Festkörper (FK), welcher Festkörper (FK) im Kontakt mit einem Medium (MED) ist, mit mindestens einer Ortsvariablen (x) und mit einer Zeitvariablen (t), **dadurch gekennzeichnet,** **dass** die Temperaturverteilung ($T(x,t)$) als Reihenentwicklung einer dynamischen

$$\text{Mode } (\sum_{i=1}^{\infty} \sigma_i(x) \cdot \gamma_i(t))$$

dargestellt wird, mit mindestens einer ortsabhängigen Eigenmode ($\sigma_i(x)$), mit mindestens einer zeitabhängigen Temperaturfunktion ($\gamma_i(t)$) und mit mindestens einem Modenwert (i), **dass** die ortsabhängige Eigenmode ($\sigma_i(x)$) bis zu einer Approximationstiefe (N) von Modenwerten (i) berechnet wird, **dass entweder** die zeitabhängige Temperaturfunktion ($\gamma_i(t)$) berechnet wird und aus dieser berechneten zeitabhängigen Temperaturfunktion ($\gamma_i(t)$) und der berechneten ortsabhängigen Eigenmode ($\sigma_i(x)$) eine Reihenentwicklung

$$(\sum_{i=1}^{N} \sigma_i(x) \cdot \gamma_i(t))$$

einer geschätzten Temperaturverteilung ($T(x,t)$) gebildet wird, **oder dass** eine Laplacetransformierte ($\gamma_i(s)$) der zeitabhängigen Temperaturfunktion ($\gamma_i(t)$) berechnet wird, aus dieser berechneten Laplacetransformierten ($\gamma_i(s)$) der zeitabhängigen Temperaturfunktion ($\gamma_i(t)$) und der berechneten ortsabhängigen Eigenmode ($\sigma_i(x)$) eine Reihenentwicklung

$$(\sum_{i=1}^{N} \sigma_i(x) \cdot \gamma_i(s))$$

einer geschätzten Laplacetransformierten ($T(x,s)$) der Temperaturverteilung ($T(x,t)$) gebildet wird, und
eine Rücktransformation der geschätzten Laplacetransformierten *(T(x,s))* der Temperaturverteilung ($T(x,t)$) durchgeführt wird.

2. Verfahren gemäss Anspruch 1, **dadurch gekennzeichnet,**
**dass** zur Berechnung der ortsabhängigen Eigenmode ($\sigma_i(x)$) und der zeitabhängigen Temperaturfunktion ($\gamma_i(t)$) mindestens eine Temperatur (T) am Festkörper (FK) erfasst wird.

3. Verfahren gemäss Anspruch 1 oder 2, **dadurch gekennzeichnet,**
**dass** zur Berechnung der zeitabhängigen Temperaturfünktion ($\gamma_i(t)$)
eine im Festkörper (FK) gespeicherte potentielle Energie (U) berechnet wird,
eine Dissipation (R) zwischen dem Festkörper (FK) und dem Medium (MED) berechnet wird,
diese potentielle Energie (U) und diese Dissipation (R) über die Gleichung von Euler-Lagrange miteinander ins Verhältnis gesetzt werden und daraus
durch Lösen einer Differentialgleichung die zeitabhängige Temperaturfunktion ($\gamma_i(t)$) berechnet wird,
**oder dass** zur Berechnung der Laplacetransformierten ($\gamma_i(s)$) der zeitabhängigen Temperaturfunktion ($\gamma_i(t)$)
eine im Festkörper (FK) gespeicherte potentielle Energie (U) berechnet wird,
eine Dissipation (R) zwischen dem Festkörper (FK) und dem Medium (MED) berechnet wird,
diese potentielle Energie (U) und diese Dissipation (R) über die Gleichung von Euler-Lagrange miteinander ins Verhältnis gesetzt werden und daraus
durch Laplacetransformation die Laplacetransformierte ($\gamma_i(s)$) der zeitabhängigen Temperaturfunktion ($\gamma_i(t)$) berechnet wird.

4. Verfahren gemäss einem der Ansprüche 1 bis 3, **dadurch gekennzeichnet, dass** zur Berechnung der ortsabhängige Eigenmode ($\sigma_i(x)$) eine Differentialgleichung gelöst wird.

5. System zur Schätzung der Temperaturverteilung ($T(x,t)$) in einem Festkörper (FK),
mit einem Festkörper (FK), welcher Festkörper (FK) im Kontakt mit einem Medium (MED) ist,
mit mindestens einem Temperaturfühler (TF), welcher Temperaturfühler (TF) mindestens eine Temperatur (T) am Festkörper (FK) erfasst,
mit einer Recheneinheit (RE) und mindestens einem Computerprogrammprodukt zur Repräsentation eines Computerprogramms, welches Computerprogramm auf der Recheneinheit (RE) ausführbar ist,
**dadurch gekennzeichnet, dass** das Computerprogramm dazu ausgebildet ist,
**dass** das Computerprogramm die Temperaturverteilung ($T(x,t)$) als Reihenentwicklung einer dynamischen Mode

$$(\sum_{i=1}^{\infty} \sigma_i(x) \cdot \gamma_i(t))$$

darstellt, mit mindestens einer ortsabhängigen Eigenmode ($\sigma_i(x)$), mit mindestens einer zeitabhängigen Temperaturfunktion ($\gamma_i(t)$), mit mindestens einem Modenwert (i), mit mindestens einer Ortsvariablen (x) und mit einer Zeitvariablen (t),
**dass** das Computerprogramm die ortsabhängige Eigenmode ($\sigma_i(x)$) bis zu einer Approximationstiefe (N) von Modenwerten (i) berechnet,
**dass** das Computerprogramm **entweder** die zeitabhängige Temperaturfunktion ($\gamma_i(t)$) berechnet und
aus dieser berechneten zeitabhängigen Temperaturfunktion ($\gamma_i(t)$) und der berechneten ortsabhängigen Eigenmode ($\sigma_i(x)$) eine Reihenentwicklung

$$(\sum_{i=1}^{N}\sigma_i(x)\cdot\gamma_i(t))$$

einer geschätzten Temperaturverteilung ($T(x,t)$) bildet,
**oder dass** das Computerprogramm eine Laplacetransformierte ($\gamma_i(s)$) der zeitabhängigen Temperaturfunktion ($\gamma_i(t)$) berechnet,
aus dieser berechneten Laplacetransformierten ($\gamma_i(s)$) der zeitabhängigen Temperaturfunktion ($\gamma_i(t)$) und der berechneten ortsabhängigen Eigenmode ($\sigma_i(x)$) eine Reihenentwicklung

$$(\sum_{i=1}^{N}\sigma_i(x)\cdot\gamma_i(s))$$

einer geschätzten Laplacetransformierten ($T(x,s)$) der Temperaturverteilung ($T(x,t)$) bildet, und eine Rücktransformation der geschätzten Laplacetransformierten *($T(x,s)$)* der Temperaturverteilung ($T(x,t)$) durchführt.

6. System gemäss Anspruch 5, **dadurch gekennzeichnet,**
**dass** das Computerprogramm zur Berechnung der zeitabhängigen Temperaturfunktion ($\gamma_i(t)$)
eine im Festkörper (FK) gespeicherte potentielle Energie (U) berechnet,
eine Dissipation (R) zwischen dem Festkörper (FK) und dem Medium (MED) berechnet,
diese potentielle Energie (U) und diese Dissipation (R) über die Gleichung von Euler-Lagrange miteinander ins Verhältnis setzt und daraus
durch Lösen einer Differentialgleichung die zeitabhängige Temperaturfunktion ($\gamma_i(t)$) berechnet,
**oder dass** das Computerprogramm zur Berechnung der Laplacetransformierten ($\gamma_i(s)$) der zeitabhängigen Temperaturfunktion ($\gamma_i(t)$)
eine im Festkörper (FK) gespeicherte potentielle Energie (U) berechnet,
eine Dissipation (R) zwischen dem Festkörper (FK) und dem Medium (MED) berechnet,
diese potentielle Energie (U) und diese Dissipation (R) über die Gleichung von Euler-Lagrange miteinander ins Verhältnis setzt und daraus
durch Laplacetransformation die Laplacetransformierte ($\gamma_i(s)$) der zeitabhängigen Temperaturfunktion ($\gamma_i(t)$) berechnet.

7. System gemäss Anspruch 5 oder 6, **dadurch gekennzeichnet, dass** das Computerprogramm zur Berechnung der ortsabhängige Eigenmode ($\sigma_i(x)$) eine Differentialgleichung löst.

8. System gemäss einem der Ansprüche 5 bis 7, **dadurch gekennzeichnet, dass** das System mindestens einen Monitor (M) zur Darstellung der Schätzung der Temperaturverteilung ($T(x,t)$) in einem Festkörper (FK) aufweist **und/oder dass** das System die Schätzung der Temperaturverteilung ($T(x,t)$) in einem Festkörper (FK) als mindestens einen Ausdruck und/oder als mindestens einen akustischen Warnton und/oder als mindestens ein optisches Warnsignal darstellt.

9. System gemäss einem der Ansprüche 5 bis 8, **dadurch gekennzeichnet, dass** das die Berechnung bzw. die Darstellung der Schätzung der Temperaturverteilung ($T(x,t)$) in einem Festkörper (FK) in Echtzeit erfolgt.

10. Computerprogrammprodukt, welches in mindestens einen Speicher (S) einer Recheneinheit (RE) ladbar ist und Computerprogrammcodemittel aufweist, die, wenn sie in einem Datenverarbeitungsmittel (ZRE) geladen und ausgeführt werden, zur Ausführung des Verfahrens gemäss einem der Ansprüche 1 bis 4 führen.

$T_1(t) = T(x_1, t)$

$T(x, t)$

$T(x.t)$

x

FK

MED

KOB

$T_2(t) = T(x_2, t)$

I

Fig. 1

FK

MED

RE

S

ZRE

M

SL

TF

Fig. 6

14

Fig. 2

Fig. 3

Fig. 4

Fig. 5

**Europäisches Patentamt**

**EUROPÄISCHER RECHERCHENBERICHT**

Nummer der Anmeldung

EP 01 81 1032

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN vol. 017, no. 350 (M-1438), 2. Juli 1993 (1993-07-02) & JP 05 050128 A (KOBE STEEL LTD), 2. März 1993 (1993-03-02) * Zusammenfassung * | 1-10 | G06F17/13 G01K1/02 |
| A | MORSE, P.M. FESHBACH, H.: "Methods of Theoretical Physics" 1953 , MCGRAW-HILL BOOK COMPANY, INC. , NEW YORK TORONTO LONDON XP002187340 Part II * Seite 1590 – Seite 1592 * | 1-14 | |
| A | DE 196 03 233 C (WICK HANS JOACHIM DR ING) 13. März 1997 (1997-03-13) * Zusammenfassung * | 1-14 | |
| A | PATENT ABSTRACTS OF JAPAN vol. 1997, no. 08, 29. August 1997 (1997-08-29) & JP 09 089712 A (MATSUSHITA REFRIG CO LTD), 4. April 1997 (1997-04-04) * Zusammenfassung * | 1-14 | RECHERCHIERTE SACHGEBIETE (Int.Cl.7) G06F G01K |
| A | GB 2 131 175 A (SOUTH WESTERN IND RES) 13. Juni 1984 (1984-06-13) * Seite 1, Zeile 5 – Seite 1, Zeile 19 * | 1-14 | |
| A | SU 1 820 226 A (GARYUNOV VLADIMIR I ;KLEPOV ANDREJ V (SU)) 7. Juni 1993 (1993-06-07) * Zusammenfassung * | 1-14 | |

Der vorliegende Recherchenbericht wurde für alle Patentansprüche erstellt

| Recherchenort | Abschlußdatum der Recherche | Prüfer |
|---|---|---|
| MÜNCHEN | 15. Januar 2002 | Thomte, M |

**ANHANG ZUM EUROPÄISCHEN RECHERCHENBERICHT
ÜBER DIE EUROPÄISCHE PATENTANMELDUNG NR.**

EP 01 81 1032

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2002

| Im Recherchenbericht angeführtes Patentdokument | | Datum der Veröffentlichung | Mitglied(er) der Patentfamilie | | Datum der Veröffentlichung |
|---|---|---|---|---|---|
| JP 05050128 | A | 02-03-1993 | JP | 2554414 B2 | 13-11-1996 |
| DE 19603233 | C | 13-03-1997 | DE | 19603233 C1 | 13-03-1997 |
| JP 09089712 | A | 04-04-1997 | KEINE | | |
| GB 2131175 | A | 13-06-1984 | KEINE | | |
| SU 1820226 | A | 07-06-1993 | SU | 1820226 A1 | 07-06-1993 |

EPO FORM P0461

Für nähere Einzelheiten zu diesem Anhang : siehe Amtsblatt des Europäischen Patentamts, Nr. 12/82